# EUROPEAN PATENT SPECIFICATION

(11) **EP 2 675 283 B1**
(45) Date of publication and mention of the grant of the patent: **14.11.2018**
(21) Application number: 12705940.0
(22) Date of filing: 14.02.2012
(51) Int. Cl.: A23G 3/34, A23G 3/54, A23G 4/06, A23G 3/36, A23G 4/20

(54) **CONFECTIONARY WITH MULTIPLE FLAVORS AND TEXTURES**
KONFEKT MIT MEHREREN AROMEN UND TEXTUREN
CONFISERIES PRÉSENTANT DE MULTIPLES SAVEURS ET TEXTURES

(30) Priority: 14.02.2011 US 201161442523 P; 31.05.2011 US 201161491362 P
(43) Date of publication of application: 25.12.2013
(73) Proprietor: Intercontinental Great Brands LLC, East Hanover, NJ 07936 (US)
(72) Inventor: COTTEN, Gerald B., Sparta, New Jersey 07871 (US); RENKEN, Shelly, Randolph, New Jersey 07869 (US); SCHWARTZ, Danielle, Cedar Knolls, New Jersey 07927 (US); STOJANOVIC, Jelena, Montclair, New Jersey 07042 (US)
(74) Representative: Wilson Gunn
(86) International application number: PCT/US2012/025008
(87) International publication number: WO 2012/112515

(56) References cited:
- EP-A2- 0 123 524
- WO-A2-2009/108769
- WO-A2-2009/140351
- US-A- 4 971 806
- US-A1- 2003 068 422
- US-A1- 2006 280 835
- US-A1- 2008 248 089
- US-A1- 2009 028 998

## Description

### FIELD

This disclosure generally relates to confectionery products having multiple flavors and multiple textures. More particularly, the confectionery products are multilayered products comprising a powder interior portion, a chewy confectionery composition portion, and an outer coating.

### BACKGROUND

Chewy candies enjoy great popularity, but most of them do not provide a combination of sensations. Studies show that multiple sensations have appeal to consumers and the more pronounced the different sensations, the greater will be the appeal.

US 2006/280835 describes compositions for a multi-modality center-filled chewing gum, where the individual gum pieces include a center-fill region surrounded by a gum region, which may be further coated with an external coating layer. At least two components that create a duality, such as two flavors, may be incorporated into different regions of the gum.

WO 2009/140351 describes a confectionery having hydrolase enzymes which have changeable textures where the action of the hydrolase causes the texture to change over time, and the extent of hydrolysis is manipulated to control the texture change.

US 2009/028998 describes chewing or bubble gum compositions that include a first region composition and a second, or gum, region adjacent to or surrounding the first region, the second region including a particulate polyol having a reduced particle size and which is saturated by a syrup material, thereby decreasing the tendency of the first region composition to be absorbed into the second region.

WO 2009/108769 describes a multi-region confectionery composition that includes a first region including a particulate material having a negative heat of solution and a second region comprising a soluble chewable matrix at least partially surrounding the first region to create one or more cavities that are filled by the first region.

US 2003/068422 describes a confectionery product comprising a casing of a protective confectionery material and a filling enclosed within the casing wherein the filling includes a major amount of monosaccharide polyol in a crystalline anhydrous powder form chosen among polyol having a cooling effect.

Furthermore, many types of chewy candies require a conditioning step to achieve a particular consistency prior to sale to consumers. Such additional steps make the production process more time consuming and there is a greater chance for variability in the quality of the resulting candy.

There remains a need in the art for confectionery exhibiting varied and multiple organoleptic properties. There also remains a need in the art for confectionery which does not need to be conditioned prior to shipping to a consumer.

### SUMMARY

Therefore, in accordance with the invention, there is provided a confectionery product, comprising:
a powder region comprising a particulate sweetener comprising a saccharide, the particulate sweetener having a particle size D(v,0.5) of 250 micrometers or less;
a chewy confectionery composition region surrounding the powder region, wherein the chewy confectionery composition has a hardness of 8 to 20 N/m2 as measured by a texture analyzer;
and
a coating composition surrounding the chewy confectionery composition
region, wherein the coating composition is a combination of a soft panned coating and a hard panned coating wherein the soft panned coating is an intermediate layer between the chewy confectionery composition region and the hard panned coating;
wherein when the confectionery product is chewed with a single bite and is consumed, exhibits
   i) a loss of powder from the powder region of 7 to 100 wt% based
      on the total weight of the powder region; or
   ii) complete dissolution of the powder region within 15 seconds when the broken sample is exposed to 37°C simulated saliva at a flow rate of 1 liter/minute.

In another embodiment, the confectionery product further comprises the powder region further comprises a first flavorant; and
the chewy confectionery composition region further comprises a second flavorant;
wherein upon consumption of the confectionery product
i) the powder region imparts a liquid mouth feel with no powder mouth feel;
   and
ii) the confectionery product exhibits a flavor sensation profile comprising at least two flavor sensations,
wherein a first flavor sensation is the first flavorant having a maximum flavor release at 1 to 5 chews; and
wherein a second flavor sensation is the second flavorant having a maximum flavor release at 15 to 30 chews;
wherein the first and second flavorant release are measured by PTR-MS. the chewy confectionery composition region; wherein when the confectionery product is chewed with a single bite, exhibits i) a loss of powder from the powder region of about 7 to about 100 wt% based on the total weight of the powder region; ii) complete dissolution of the powder region within 15 seconds when the broken sample is exposed to 37°C simulated saliva at a flow rate of 1 liter/minute; or iii) an average piece break size of about 1 mm to a complete split.

In one embodiment, a confectionery product comprises a powder region comprising a particulate sweetener comprising a saccharide; a chewy confectionery composition region surrounding the powder region; and a coating composition surrounding the chewy confectionery composition region; wherein upon consumption of the confectionery product i) the powder region imparts a liquid mouth feel with no powder mouth feel; and ii) the confectionery product exhibits a flavor sensation profile comprising at least two flavor sensations, wherein a first flavor sensation initiates at a time point that is about 6 to about 21% into a total chew time, and the first flavor sensation lasts not more than about 12 to about 36% of the total chew time. Within this embodiment, a second flavor sensation begins to predominate over the first flavor sensation at a time point that is about 24 to about 52% into the total chew time, and the second flavor sensation lasts for about 48 to about 76% of the total chew time. In another embodiment, the first flavor sensation is a first flavor; and a liquid mouth feel, a mouth watering mouth feel, or a combination thereof and a second flavor sensation is a second flavor.

In another embodiment, a confectionery product comprises a liquid region comprising a sweetener comprising a saccharide, a sugar polyol, or a combination thereof; a chewy confectionery composition region surrounding the powder region; and a coating composition surrounding the chewy confectionery composition region; wherein upon consumption of the confectionery product the confectionery product exhibits a flavor sensation profile comprising at least two flavor sensations, wherein a first flavor sensation initiates at a time point that is about 6 to about 21% into a total chew time, and the first flavor sensation lasts not more than about 12 to about 36% of the total chew time. Within this embodiment, a second flavor sensation begins to predominate over the first flavor sensation at a time point that is about 24 to about 52% into the total chew time, and the second flavor sensation lasts for about 48 to about 76% of the total chew time. In another embodiment, the first flavor sensation is a first flavor; and a liquid mouth feel, a mouth watering mouth feel, or a combination thereof and a second flavor sensation is a second flavor.

In another embodiment, the intensity of the first flavor sensation is greater than the intensity of the second flavor sensation.

In yet another embodiment, the duration of the first flavor sensation is less than the duration of the second flavor sensation.

In still another embodiment, the first flavor sensation differs from the second flavor sensation in texture, flavor, intensity, or a combination thereof.

In another embodiment, a method of making a confectionery composition preparing a chewy confectionery composition region, the chewy confectionery composition having a hardness of 8 to 20 N/m² as measured by a texture analyzer;
center-filling the chewy confectionery composition region with a powder
region comprising a saccharide having a particle size D(v,0.5) of 250 micrometers or less to form a center-filled intermediate product;
applying a soft coating to the surface of the center-filled intermediate product and then applying a hard coating to form the confectionery product;
wherein there is no conditioning step prior to packaging or sale of the
confectionery product; and
wherein upon consumption of the confectionery product, the powder region
imparts a liquid mouth feel with no powder mouth feel.
Within this embodiment, the chewy confectionery composition region is grained by mechanical agitation prior to the center-filling step. Furthermore, the confectionery product does not require a conditioning step.

The above described and other features are exemplified by the following detailed description.

### BRIEF DESCRIPTION OF THE DRAWINGS

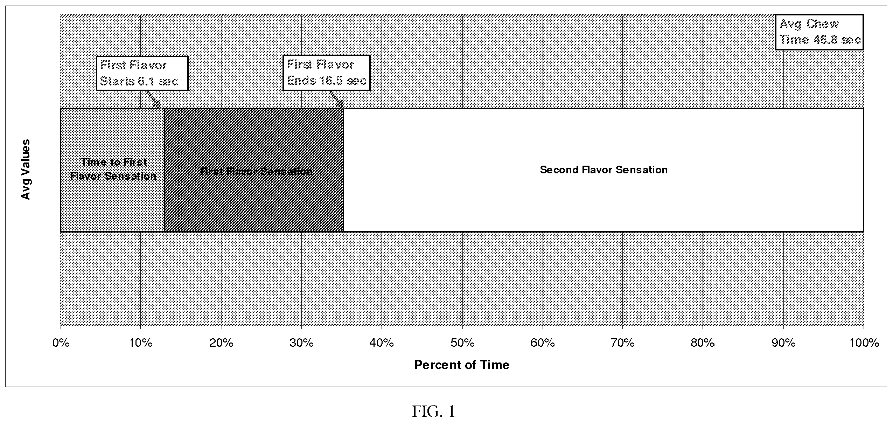

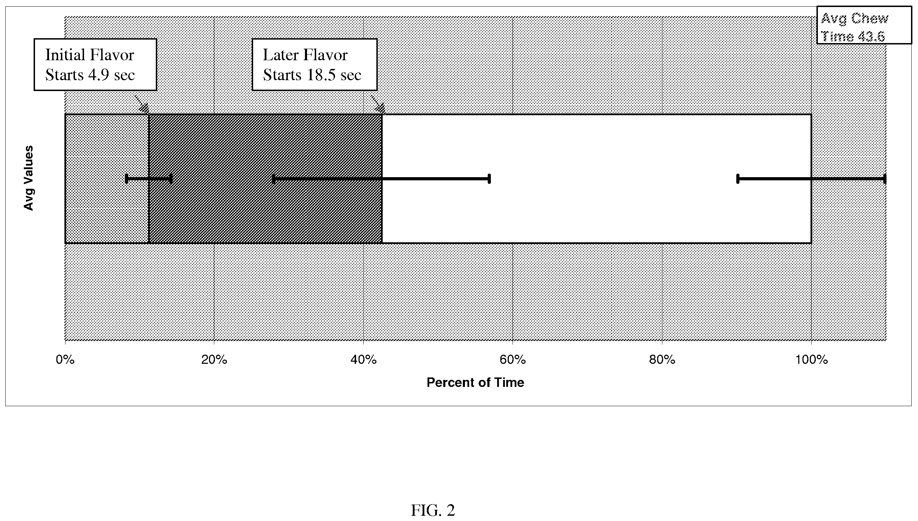

FIG.1 and FIG.2 are representations of the results of two flavor sensation panels illustrating initiation and duration time for multiple flavor sensations for an exemplary confectionery product.

### DETAILED DESCRIPTION

Disclosed herein are confectionery products that have multiple regions which impart multiple flavors, multiple textures, or a combination thereof. The confectionery product comprises at least three regions: a powder region comprising a particulate sweetener or a liquid region; a chewy confectionery composition region surrounding the powder region/liquid region; and a coating composition at least partially surrounding the chewy confectionery composition region. Two or more of the regions contain flavors. The flavors of each region can be the same or different, and each region delivers the flavor at different time points, different durations, different intensities, or a combination thereof as compared to the other regions. Furthermore, each region imparts a different physical sensation or texture.

When consumed, the confectionery product exhibits a flavor sensation profile such that the consumer perceives multiple and different tastes and textures during the total chew time. As used herein "flavor sensation" means a sensory stimulus perceived by the consumer when the product is consumed which includes a flavor perception (i.e. taste) aspect optionally accompanied by a physical sensation (i.e., feeling, touch, texture) aspect. For example, in one embodiment the consumer experiences, for a portion of the chew time, a first flavor sensation that is a liquid mouth feel accompanied by a first flavor, and once the first flavor sensation concludes a second flavor sensation predominates which can be a flavor optionally accompanied by a physical sensation. In another embodiment, the consumer experiences, for a portion of the chew time, a first flavor sensation that is a liquid mouth feel, a mouth watering feel, and further accompanied by a first flavor.

Upon consumption of the confectionery product, the powder region imparts a feeling of liquidity, which is perceived at the same time as a flavor imparted by the powder region, if flavor is used. The powder region dissolves quickly when exposed to mouth moisture such that there is no sensation of particulate matter, but rather the only sensation observed by the consumer is that of a liquid. Not wishing to be bound by theory, it is suggested that upon chewing the confectionery product the moisture of the mouth and the powder combine to result in a liquid material that has the combination of low viscosity and low surface tension such that the liquid material spreads over the tongue and contacts a large number of tongue taste receptors thus providing an intense flavor sensation. The confectionery product also provides a mouth watering sensation, which is believed to come from the powder region quickly going into solution thereby providing an intense liquid sensation.

As used herein, the term "liquid" refers to compositions that will readily flow or maintain fluid properties at room temperature and pressure. The term "liquid" may include solutions, suspensions, emulsions, semi-solids, cremes, gels, and the like, or a combination thereof.

In several embodiments, a first flavor sensation is imparted by the powder region in the early stages of the chew time and occurs when the powder is dissolved and spread over the tongue and ends when most of the resulting powder region is ingested. Once the powder region is ingested, a second flavor sensation is experienced as the flavor from the outer layer(s) are more prominently perceived. The second flavor sensation will last at least 50% of the total chew time. In one embodiment, the first and the second flavor sensations are different, such as two different fruit flavors or mint flavors. In another embodiment, the second flavor sensation can be similar to the first flavor sensation, but will vary in intensity, such as the same fruit or mint flavors but of different intensities.

In one embodiment, the powder region is non-agglomerating. A "non-agglomerating powder" means a quick dissolving powder that does not initially clump when exposed to water. The non-agglomerating powder region is a quick dispersing, quick dissolving powder which feels smooth when consumed (i.e. it does not feel like a paste).

The coating composition at least partially surrounds the chewy confectionery composition region while the powder region is at least partially surrounded by the chewy confectionery composition region. The coating composition and chewy confectionery composition region exhibit rupture characteristics such that chewing action results in a release of the center powder rather than continued encapsulation of the center by these outer layers. Rupture characteristics can be measured using a texture analyzer.

Also disclosed herein are confectionery products that do not require conditioning and can be packaged and sold as soon as they are produced. The resulting confectionery product minimizes the probability that a consumer will receive a low quality candy as the quality will be more consistent batch to batch, thereby enhancing the consuming experience. The chewy confectionery composition is manufactured in such a manner so that the confectionery product is ready for consumption immediately after manufacture. This avoids quality problems and inventory issues that exist when other candies are made. Specifically, during production mechanical agitation of the chewy confectionery composition is used to change the composition from an initial amorphous composition to a composition that is substantially crystalline. This produces a grained composition and thus the confectionery product does not require a conditioning step (e.g. holding for 1 to 3 weeks) to achieve a product with a desirably soft texture.

In several embodiments, the amount of chewy confectionery composition region is about 50 to about 85 weight percent (wt%) based on total weight of the confectionery product, specifically about 60 to about 75 wt%, and more specifically about 65 to about 70 wt%.

In several embodiments, the amount of chewy confectionery composition region is about 45 to about 85 weight percent (wt%) based on total weight of the confectionery product, specifically about 55 to about 70 wt%, and more specifically about 60 to about 65 wt%.

In several embodiments, the amount of powder region is about 5 to about 20 wt% based on total weight of the confectionery product, specifically about 7.5 to about 17.5 wt%, and more specifically about 10 to about 15 wt%.

In several embodiments, the amount of coating composition is about 10 to about 30 wt% based on total weight of the confectionery product, specifically about 15 to about 25 wt%, and more specifically about 17 to about 22 wt%. In several embodiments, the amount of coating composition is about 10 to about 40 wt% based on total weight of the confectionery product, specifically about 15 to about 35 wt%, and more specifically about 20 to about 30 wt%. The coating composition can be a soft panned coating, a hard panned coating, or a combination of the two. The soft panned coating can be an intermediate layer between the chewy confectionery composition region and the hard panned coating. When the coating composition is a combination of a soft panned coating and a hard panned coating, the weight ratio of the two types of coatings can be about 10:90 to about 90:10 for the soft panned coating : the hard panned coating, specifically about 20:80 to about 80:20, more specifically about 30:70 to about 70:30, yet more specifically about 40:60 to about 60:40, and still more specifically about 45:55 to about 55:45.

In several embodiments, the weight ratio of chewy confectionery composition region : powder region : coating composition is about 45:20:35 to about 85:5:10. In other embodiments, the weight ratio of chewy confectionery composition region : powder region : coating composition is about 55:15:30 to about 75:5:20. In still other embodiments, the weight ratio of chewy confectionery composition region : powder region : coating composition is about 60:15:25 to about 70:10:20.

### Powder Region

In several embodiments, the confectionery product comprises a powder region. The powder region comprises a particulate sweetener wherein the particulate sweetener is a sugar polyol, a saccharide, or a combination thereof. The powder region may optionally further comprise a flavorant, a sensate, a food acid or salt thereof, a high intensity sweetener, a processing aid, a flavor modulator or potentiator, a functional ingredient, or a combination thereof.

In one embodiment, the powder region comprises a particulate sweetener (e.g. a saccharide), and a flavorant. In another embodiment, the powder region comprises a particulate sweetener (e.g. a saccharide), a flavorant, and a food acid.

The particulate sweetener of the powder region has a particle size D(v,0.5) of 250 micrometers or less, more specifically 200 micrometers or less, even more specifically 175 to 200 micrometers and yet more specifically 175 to 190 micrometers. D(v,0.5) is the median particle size (i.e., the number where approximately 50% of the particles are smaller and 50% of the particles are larger). Exemplary methods of measuring particle size include the use of particle size analyzers using laser diffraction particle sizing techniques.

Exemplary saccharides for use in the powder region include mono-saccharides, disaccharides and poly-saccharides such as but not limited to, sucrose (sugar), dextrose, maltose, dextrin, xylose, ribose, glucose, mannose, galactose, fructose (levulose), lactose, corn syrup solids, or a combination thereof. A specific saccharide is dextrose monohydrate.

The particulate sweetener of the powder region can be a sugar polyol such as erythritol, galactitol, hydrogenated isomaltulose (isomalt), a hydrogenated starch hydrolysate, lactitol, maltitol, mannitol, polyglycitol, sorbitol, xylitol, or a combination thereof. A specific sugar polyol is isomalt, erythritol, xylitol, or a combination thereof; more specifically isomalt, erythritol, or a combination thereof.

The isomalt used in the powder region can have any ratio of 1,6-GPS (6-O-α-D-glucopyranosyl-D-sorbitol) and 1,1-GPM (1-O-α-D-glucopyranosyl-D-mannitol), such as a mixture of 99 to 1% 1,6-GPS to 1 to 99 weight % 1,1-GPM based on wt% dry matter. One exemplary isomalt may be isomalt ST which is an equimolar or nearly equimolar mixture of 1,6-GPS and 1,1-GPM. In another embodiment, the isomalt is a mixture of 43 to 57% 1,6-GPS and 57 to 43% 1,1-GPM, specifically an equimolar 1:1 mixture based on wt% dry matter.

In another embodiment the isomalt may be a 1,6-GPS-enriched mixture, a 1,1-GPM-enriched mixture, or 1,1-GPM and 1,6-GPS containing mixtures which further comprise 1,1-GPS (1-O-α-D-glucopyranosyl-D-sorbitol). In one embodiment, isomalt GS is a mixture of 1,6-GPS and 1,1-GPM in a ratio from 71 to 79% 1,6-GPS and 21 to 29% 1,1-GPM, specifically 75% 1,6-GPS to 25% 1,1-GPM based on wt% dry matter.

In one embodiment, a 1,1-GPM-enriched mixture is a mixture comprising 1,1-GPM and 1,6-GPS, wherein the mixture comprises more than 57 to 99 wt% 1,1-GPM and less than 43 to 1 wt% 1,6-GPS on a dry matter basis. In another embodiment, a 1,6-GPS-enriched mixture is a mixture comprising 1,1-GPM and 1,6-GPS, wherein the amount of 1,1-GPM is less than 43 to 1% and the amount of 1,6-GPS is from more than 57 to 99 wt% based on wt% dry matter.

The powder region can comprises 85 to 100 wt% of particulate sweetener based on the total weight of the powder region, specifically 90 to 98 wt%, and more specifically 93 to 95 wt%.

In one embodiment, the isomalt used in the powder region has particle diameters of less than 100 micrometers, specifically less than 50 micrometers. Particle size as described herein is measured by scanning electron microscopy (SEM) or other optical or screening (e.g. sieve) techniques, for example using a coulter counter.

Exemplary flavorants (flavor, flavoring agent) that can be used include those artificial or natural flavors known in the art, for example synthetic flavor oils, natural flavoring aromatics and/or oils, oleoresins, extracts derived from plants, leaves, flowers, fruits, and the like, or a combination thereof. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, and citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, honey lemon, and the like, or a combination thereof. Specific flavorants are mints such as peppermint, spearmint, artificial vanilla, cinnamon derivatives, and various fruit flavors.

Other types of flavorants include various aldehydes and esters such as cinnamyl acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin).

The flavorant can be used in liquid or solid form, specifically a solid form for use in the powder region. When used in solid (dry) form, suitable drying means such as spray drying the oil can be used. Alternatively, the flavorant can be encapsulated, absorbed onto water soluble materials by means known in the art, for example cellulose, starch, sugar, maltodextrin, gum arabic, and the like. In some embodiments, the flavorant can be used in physical forms effective to provide an initial burst of flavor or a prolonged sensation of flavor.

Exemplary sensates include cooling agents, warming agents, tingling agents, effervescent agents, or a combination thereof. Coolants are additives that provide a cooling or refreshing effect in the mouth, in the nasal cavity, or on skin. For example, among the useful cooling agents are included menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-2,2-diisopropylbutanamide, N-ethyl-p-menthane-3-carboxamide (WS-3), ethyl ester of N-[[5-methyl-2-(1-methylethyl)cyclohexyl]carbonyl]glycine (WS5), as well as the substantially pure ethyl ester of N-[[5-methyl-2-(1-methylethyl)cyclohexyl]carbonyl]glycine as disclosed in U.S. Patent No. 7,189760 to Erman, et al which is incorporated in its entirety herein by reference, isopulegol, menthyloxy propane diol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT® type MGA); 3-1-menthoxypropane-1,2-diol (from Takasago, FEMA 3784); and menthyl lactate; (from Haarman & Reimer, FEMA 3748, tradename FRESCOLATOO type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; Menthol methyl ether, menthyl pyrrolidone carboxylate; 2,5-dimethyl-4-(1-pyrrolidinyl)-3(2H)-furanone; cyclic α-keto enamines, cyclotene derivatives such as cyclopentenes including 3-methyl-2-(1-pyrrolidinyl)-2-cyclopenten-1-one and 5-methyl-2-(l-pyrrolidinyl)-2-cyclopenten-1-one, compounds of the formula: 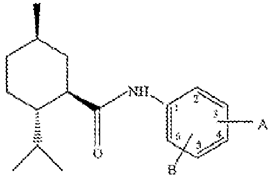 wherein B is selected from H, CH₃, C₂H₅, OCH₃, OC₂H₅; and OH; and wherein A is a moiety of the formula-CO-D, wherein D is selected from the following moieties: (i)-NR¹R², wherein R¹ and R² are independently selected from H and C₁-C₈ straight or branched-chain aliphatic, alkoxyalkyl, hydroxyalkyl, araliphatic and cycloalkyl groups, or R¹ and R² together with the nitrogen atom to which they are attached form part of an optionally-substituted, five-or six-membered heterocyclic ring; (ii)-NHCH₂COOCH₂CH₃,-NHCH₂CONH₂,-NHCH₂CH₂OCH₃,-NHCH₂CH₂OH,-NHCH₂CH(OH)CH₂OH and (iii) a moiety selected from the group consisting of: 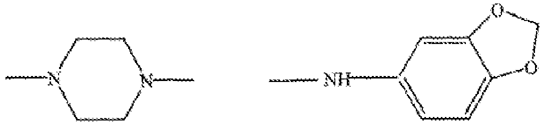 as disclosed in PCT Patent Application WO2006/125334 to Bell et al. Other compounds include the alpha-keto enamines disclosed in U.S. Patent Number 6,592,884 to Hofmann et al. These and other suitable cooling agents are further described in the following U.S. patents: U.S. 4,230,688; 4,032,661; 4,459,425; 4,178,459; 4,296,255; 4,136,163; 5,009,893; 5,266,592; 5,698,181; 6,277,385; 6,627,233; 7,030,273. Still other suitable cooling agents are further described in the following U.S. Published Patent Applications: U.S. 2005/0222256; 2005/0265930.

Warming agents can be selected from a wide variety of compounds known to provide the sensory signal of warming to the user. These compounds offer the perceived sensation of warmth, particularly in the oral cavity, and often enhance the perception of flavors, sweeteners and other organoleptic components. Among the useful warming agents included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamylether, vanillyl alcohol n-hexylether, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropol alcohol, iso-amylalcohol, benzyl alcohol, glycerine, or a combination thereof.

In some embodiments, tingling agents may be employed to provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; perillartine; 4-(1-menthoxymethyl)-2-phenyl-1,3-dioxolane; black pepper extract (piper nigrum), including the active ingredients chavicine and piperine; Echinacea extract; Northern Prickly Ash extract; trans-pellitorin, and red pepper oleoresin. In some embodiments, alkylamides extracted from materials such as jambu or sanshool may be included. Additionally, in some embodiments, a sensation is created due to effervescence. Such effervescence is created by combining an alkaline material with an acidic material, either or both of which may be encapsulated. In some embodiments, an alkaline material may include alkali metal carbonates, alkali metal bicarbonates, alkaline earth metal carbonates, alkaline earth metal bicarbonates and mixtures thereof. In some embodiments, an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid or a combination thereof. Examples of "tingling" type sensates include those disclosed in U.S. Patent Nos. 6,780,443, 6,159,509, 5,545,424, and 5,407,665.

Exemplary food acids and food acid salts include acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and alkali metal salts thereof (e.g., sodium citrate dihydrate), or a combination thereof.

A "high intensity sweetener" as used herein means agents having a sweetness greater than the sweetness of sucrose. In some embodiments, a high intensity sweetener has a sweetness that is at least 100 times that of sugar (sucrose) on a per weight basis, specifically at least 500 times that of sugar on a per weight basis. In one embodiment the high intensity sweetener is at least 1,000 times that of sugar on a per weight basis, more specifically at least 5,000 times that of sugar on a per weight basis. The high intensity sweetener can be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners can be used. Without being limited to particular sweeteners, representative categories and examples include:
water-soluble sweetening agents such as dihydrochalcones, monellin, steviosides, rebaudiosides, glycyrrhizin, dihydroflavenol, monatin, and L-aminodicarboxylic acid aminoalkenoic acid ester amides, such as those disclosed in U.S. Pat. No. 4,619,834, or a combination thereof;
water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, or a combination thereof; dipeptide based sweeteners, for example the L-aspartic acid derived sweeteners such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame, or a combination thereof;
water-soluble sweeteners derived from naturally occurring water-soluble sweeteners, such as steviosides and stevia derived compounds such as but not limited to steviol glycosides such as rebaudiocides including rebaudiocide A, and the like, lo han quo and lo han quo derived compounds such as iso-mogroside V and the like, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichlorol',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideoxy-beta-D-fructofuranoside, or 4,6,1',6'-tetrachloro4,6,1',6'-tetradeoxygalacto-sucrose; 4,6,1',6'-tetradeoxy-sucrose, or a combination thereof;
protein based sweeteners such as thaumaoccous danielli, talin, or a combination thereof; and
amino acid based sweeteners.

The high intensity sweetener can be used in a variety of distinct physical forms, for example those known in the art to provide an initial burst of sweetness and/or a prolonged sensation of sweetness. Without being limited thereto, such physical forms include free forms (e.g., spray dried or powdered), beaded forms, encapsulated forms, or a combination thereof.

Exemplary processing aids for use in the powder region include tricalcium phosphate, silicon dioxide, talc, starch, or a combination thereof.

The processing aid may be present in the powder region in an amount of about 0.1 to about 3 wt% based on the total weight of the powder region, specifically about 0.5 to about 2 wt%, and more specifically about 0.8 to about 1.5 wt%.

A sweet taste can come from flavor modulators or potentiators and/or from flavorants as well as from sweeteners. Flavor potentiators can consist of materials that intensify, supplement, modify or enhance the taste or aroma perception of an original material without introducing a characteristic taste or aroma perception of their own. Flavor modulators can impart a characteristic of their own that complements or negates a characteristic of another component. In some embodiments, flavor modulators or potentiators are designed to intensify, supplement, modify, or enhance the perception of flavor, sweetness, tartness, umami, kokumi, saltiness or a combination thereof can be included. Thus, the addition of flavor modulators or potentiators can impact the overall taste of the comestible. For example, flavors can be compounded to have additional sweet notes by the inclusion of flavor modulators or potentiators, such as vanilla, vanillin, ethyl maltol, furfual, ethyl propionate, lactones, or a combination thereof.

Exemplary flavor modulators or potentiators include monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs), or a combination thereof. In some embodiments, sugar acids, sodium chloride, potassium chloride, sodium acid sulfate, or a combination thereof are used. In other embodiments, glutamates such as monosodium glutamate, monopotassium glutamate, hydrolyzed vegetable protein, hydrolyzed animal protein, yeast extract, or a combination thereof are included. Further examples include adenosine monophosphate (AMP), glutathione, and nucleotides such as inosine monophosphate, disodium inosinate, xanthosine monophosphate, guanylate monophosphate, or a combination thereof. Further examples of flavor potentiator compositions that impart kokumi are also included in U.S. Patent No. 5,679,397 to Kuroda et al.

The amount of flavor modulators, flavor potentiators, and flavorants used herein can be a matter of preference subject to such factors as the type of final product composition, the individual flavor, the region of the confectionery product flavored, and the strength of flavor desired. Thus, the amount of flavoring can be varied in order to obtain the result desired in the final product and such variations are within the capabilities of those skilled in the art without the need for undue experimentation.

Exemplary functional ingredients for use in the powder region include a breath freshener, a dental care component, an active, an herbal, an effervescing system, an appetite suppressor, a vitamin, a micronutrient, a mouth moistening component, a throat care component, an energy boosting agent, a concentration boosting agent, or a combination thereof.

### Liquid Region

In several embodiments, the confectionery product comprises a liquid region. The liquid region can comprise a sweetener wherein the sweetener is a sugar polyol, a saccharide, or a combination thereof. The liquid region may optionally further comprise an additional ingredient which maintains the region in liquid form, e.g. crystallization inhibitors such as glycerin, propylene glycol, and the like. Other optional component of the liquid region include a fat, a flavorant, a sensate, a food acid or salt thereof, a high intensity sweetener, a flavor modulator or potentiator, a functional ingredient, a hydrocolloid, or a combination thereof.

Exemplary sweetener for use in the liquid region include those previously discussed, specifically corn syrups, sugar syrups, dextrose syrups, polydextrose syrups, high fructose corn syrups, invert sugar syrups, fructooligosaccharide syrups, sorbitol syrups, hydrogenated starch hydrolysate syrups, maltitol syrups, polyglycitol syrups, or a combination thereof.

### Chewy Confectionery Composition Region

The chewy confectionery composition region comprises a bulk sweetener, a fat/oil, an emulsifier, a hydrocolloid, and water. The chewy confectionery composition region may optionally further comprise a flavorant, a sensate, a food acid or salt thereof, a high intensity sweetener, a color, a flavor modulator or potentiator, a functional ingredient, or a combination thereof.

The bulk sweetener for use in the chewy confectionery composition region can include sugar sweeteners, sugarless sweeteners, or a combination thereof. Sugar sweeteners generally include saccharides. Suitable sugar sweeteners include mono-saccharides, disaccharides and poly-saccharides such as but not limited to, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, such as high fructose corn syrup, or a combination thereof.

The sugarless sweetener can be a sugar polyol such as erythritol, galactitol, hydrogenated isomaltulose (isomalt), a hydrogenated starch hydrolysate, lactitol, maltitol, mannitol, polyglycitol, sorbitol, xylitol, or a combination thereof.

The isomalt used in the chewy confectionery composition region can have any ratio of 1,6-GPS (6-O-α-D-glucopyranosyl-D-sorbitol) and 1,1-GPM (1-O-α-D-glucopyranosyl-D-mannitol), such as a mixture of 99 to 1% 1,6-GPS to 1 to 99 weight % 1,1-GPM based on wt% dry matter. One exemplary isomalt may be isomalt ST which is an equimolar or nearly equimolar mixture of 1,6-GPS and 1,1-GPM. In another embodiment, the isomalt is a mixture of 43 to 57% 1,6-GPS and 57 to 43% 1,1-GPM, specifically an equimolar 1:1 mixture based on wt% dry matter.

In another embodiment the isomalt may be a 1,6-GPS-enriched mixture, a 1,1-GPM-enriched mixture, or 1,1-GPM and 1,6-GPS containing mixtures which further comprise 1,1-GPS (1-O-α-D-glucopyranosyl-D-sorbitol). In one embodiment, isomalt GS is a mixture of 1,6-GPS and 1,1-GPM in a ratio from 71 to 79% 1,6-GPS and 21 to 29% 1,1-GPM, specifically 75% 1,6-GPS to 25% 1,1-GPM based on wt% dry matter.

In one embodiment, a 1,1-GPM-enriched mixture is a mixture comprising 1,1-GPM and 1,6-GPS, wherein the mixture comprises more than 57 to 99 wt% 1,1-GPM and less than 43 to 1 wt% 1,6-GPS on a dry matter basis. In another embodiment, a 1,6-GPS-enriched mixture is a mixture comprising 1,1-GPM and 1,6-GPS, wherein the amount of 1,1-GPM is less than 43 to 1% and the amount of 1,6-GPS is from more than 57 to 99 wt% based on wt% dry matter.

In one embodiment, a portion of the isomalt used in the chewy confectionery composition region is a combination of isomalt GS and isomalt ST having particle diameters of less than about 100 micrometers, specifically less than about 50 micrometers.

The bulk sweetener can be present in the chewy confectionery composition region in an amount of about 65 to about 92wt% based on the total weight of the chewy confectionery composition region, specifically 70 to 85wt%, and yet more specifically 75 to 80wt%.

In one embodiment, the bulk sweetener of the chewy confectionery composition region is a sugar polyol selected from the group consisting of isomalt, maltitol syrup, or a combination thereof. In a further embodiment, the bulk sweetener comprises a ratio of 1:1 to 1.8:1 isomalt to maltitol syrup, specifically 1.1:1 to 1.6:1, and more specifically 1.3:1 to 1.4:1.

Exemplary fats for use in the chewy confectionery composition region include fats and oils of vegetable origin, animal origin, or a combination thereof. Suitable vegetable fats can include soybean, cottonseed, corn, almond, peanut, sunflower, rapeseed, olive, palm, palm kernel, illipe, shea, coconut, cocoa, cocoa butter, or a combination thereof. The forgoing vegetable fats can be hydrogenated to varying degrees as desired. Suitable animal fats include dairy fats such as milk fat and butter. As used herein, the term "fat" refers to any lipid material and can be solid or liquid.

A fat can be present in the chewy confectionery composition region in an amount of about 1 to about 7wt% based on the total weight of the chewy confectionery composition region, specifically about 2 to about 6wt%, and more specifically about 3 to about 5wt%.

Suitable emulsifiers for use in the chewy confectionery composition region include distilled monoglycerides, lecithin, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate (glyceryl monostearate), glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate lecithin, ammonium phosphatide, sucrose esters of fatty acids, sucroglycerides, propane-1,2-diol esters of fatty acids, or a combination thereof.

In one embodiment, the emulsifier of the chewy confectionery composition region is lecithin, glyceryl monostearate, or a combination thereof.

The emulsifier can be present in the chewy confectionery composition region in an amount of about 0.01 to about 5 wt% based on the total weight of the chewy confectionery composition region, specifically about 0.1 to about 3 wt%, and more specifically about 0.2 to about 1 wt%.

Hydrocolloid materials can include naturally occurring materials such as plant exudates, seed gums, and seaweed extracts or they can be chemically modified materials such as cellulose, starch, or natural gum derivatives. Furthermore, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, and bacterial gums. Modified natural gums inlcude propylene glycol alginate, carboxymethyl locust bean gum, low methoxyl pectin, or a combination thereof. Modified celluloses can be included such as microcrystalline cellulose, carboxymethlcellulose (CMC), methylcellulose (MC), hydroxypropylmethylcellulose (HPCM), hydroxypropylcellulose (MPC), or a combination thereof. In one embodiment, the hydrocolloid is gelatin.

The chewy confectionery composition region can contains the hydrocolloid in an amount of about 0.01 to about 5 wt% based on the total weight of the chewy confectionery composition region, specifically about 0.1 to about 2 wt%, and more specifically about 0.8 to about 1.5 wt%.

The chewy confectionery composition region after production can have a water content of about 5.5 to about 6.5wt% based on the total weight of the chewy confectionery composition region.

Exemplary food acids and food acid salts for use in the chewy confectionery composition region include acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and alkali metal salts thereof (e.g., sodium citrate dihydrate), or a combination thereof.

The chewy confectionery composition region may further include a high intensity sweetener such as those previously described above for the powder region. Specific high intensity sweeteners for use in the chewy confectionery composition region include aspartame, neotame, sucralose, monatin, acesulfame potassium, an encapsulated form of the high intensity sweetener, or a combination thereof.

The chewy confectionery composition region may further include a sensate selected from the group consisting of a cooling agent, a warming agent, a tingling agent, or a combination thereof. Exemplary sensates for use in the chewy confectionery composition region include those previously described above for use in the powder region.

The amount of food acid, flavor, sensate, or a combination thereof present in the chewy confectionery composition region can be up to about 5.0 wt% based on the total weight of the chewy confectionery composition region, specifically about 1.0 to about 4.0 wt%, and more specifically about 2.0 to about 3.0 wt%.

The chewy confectionery composition region may further include a functional ingredient such as a breath freshener, a dental care component, an active, an herbal, an effervescing system, an appetite suppressor, a vitamin, a micronutrient, a mouth moistening component, a throat care component, an energy boosting agent, a concentration boosting agent, or a combination thereof.

Coloring agents (colors, colorants, colorings) can be used in amounts effective to produce a desired color for the chewy confectionery composition region. Suitable coloring agents include pigments, which can be incorporated in amounts up to about 6 wt% based on the total weight of the chewy confectionery composition region. For example, titanium dioxide can be incorporated in amounts up to about 2 wt%, and specifically less than about 1 wt% based on the total weight of the chewy confectionery composition region. Suitable coloring agents also include natural food colors and dyes suitable for food, drug, and cosmetic applications. Suitable colors include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), or a combination thereof. In some embodiments, certified colors can include FD&C aluminum lakes, or a combination thereof. A full recitation of all FD& C colorants and their corresponding chemical structures maybe found in the Kirk-Othmer Encyclopedia of Chemical Technology, 4th Edition, in volume 1 at pages 492-494.

Coloring agents can also include food grade glitter which can be incorporated into the chewy confectionery composition region. The edible glitter can include a food grade colorant and a carrier such as a sugar, a sugar polyol, a disaccharide, a polysaccharide, a hydrocolloid material, or a combination thereof. Exemplary glitter includes the commercially available Edible Glitter™ from Watson Inc. of West Haven, CT.

The coloring agent can include food grade pearlescent pigments prepared from mica optionally coated with titanium dioxide, iron oxide, and the like.

The chewy confectionery composition has a particular texture to allow for the rapid release of the powder centerfill region upon chewing. The texture allows for the product to crack or split in half at the first bite to expose the powder region to mouth saliva. If the texture is too soft, the powder gets trapped in the chewy confectionery composition. If the chewy confectionery composition is too hard, it provides an unpleasant chew experience. The chewy confectionery composition region has a hardness as measured by a texture analyzer of 8 to 20 N/m2, specifically 10 to 18 N/m2, and yet more specifically 14 to 15 N/m2.

### Exterior Coating

The exterior of the confectionery product can be a hard panned coating, a soft panned coating, or a combination thereof. In one embodiment, the confectionery product can have a soft panned coating as an intermediate layer between the chewy confectionery composition region and a hard coating.

As used herein, "soft panned" coatings refer to coatings that provide a soft bite as measured by sensory testing methods. As used herein, "hard panned" coatings refer to coatings that provide a hard or crunchy or crispy bite as measured by sensory testing methods. The confectionery products may be tested by a fully-trained descriptive analysis panel using various methods, for example, the analysis may be conducted using the Spectrum™ method. This method incorporates a trained panel of individuals who measure confectionery compositions for several characteristics, providing a rating for each characteristic. The hardness of the coating may be measured on any scale desired. For example, hardness may be on a ten point scale from 1-10, where a rating of 1 is the softest and a rating of 10 is the hardest. Typically, soft panned coatings have a hardness rating below the rating of hard panned coatings. For example, in one embodiment, a soft panned coated product may have a hardness sensory rating of about 3-4, while hard panned coated product may have a hardness sensory rating of about 7-8.

The uncoated confectionery product pieces (alternatively described as "cores") can be panned according to conventional processes to create a soft- or hard- panned layers. Conventional techniques for hard and soft panning technology are described in the following: "Sugarless Hard Panning", Robert Boutin, et al., The Manufacturing Confectioner, pp. 35-42, November 2004; "Panning Technology, An Overview:", John Flanyak, The Manufacturing Confectioner, pp. 65-74, January 1998; "Crystallization and Drying During Hard Panning", Richard W, Hartel, The Manufacturing Confectioner, pp. 51-57, February, 1995; "Soft Panning", Michael J. Lynch, The Manufacturing Confectioner, pp. 47-50, November 1987; and "Panning - The Specialist's Specialty", Robert D. Walter, Candy & Snack Industry, pp. 43-51, December 1974.

The coating composition at least partially surrounding the chewy confectionery composition region generally comprises a bulk sweetener and gum arabic, starch or a combination of gum arabic and starch. The coating composition optionally may further comprise an additional ingredient such as a color, a flavorant, a sensate, a food acid or salt thereof, a flavor modulator or potentiator, a functional ingredient, or a combination thereof. Each of these ingredients has been previously described herein for use in the powder region or chewy confectionery composition region. In some embodiments, the additional ingredient is encapsulated or unencapsulated (or "free"). If more than one ingredient is used, the coating may contain any combination of encapsulated or unencapsulated ingredients.

As used herein, the terms "coating" or "coating region" are used to refer to a region of a material that at least partially surrounds the a confectionery core.

As used herein, the terms "surround", "surrounding", "at least partially surrounding", and the like are not limited to encircling. These terms may refer to enclosing or confining on all sides, encircling or enveloping, and are not limited to symmetrical or identical thicknesses.

As used herein, the term "substantially covers" and "substantially surrounding" refers to coating compositions that cover more than 50% of the surface area of a confectionery core. In other embodiments, "substantially covers" may refer to coverage that is more than 55%, more than 60%, more than 65%, more than 70%, more than 75%, more than 80%, more than 85%, more than 90%, more than 95%, more than 98%, and more than 99% of the surface are of a confectionery core.

In several embodiments, the food acid or salt thereof, high intensity sweetener, sensate, flavorant, flavor modulator or potentiator, coloring agent, functional ingredient, or a combination thereof may be present in an amount of about 0.05 to about 20 wt% based on the total weight of the coating, specifically about 0.1 to about 18 wt%, more specifically about 1 to about 16 wt%, or yet more specifically about 5 to about 15 wt%.

In one embodiment, the confectionery product is further processed by polishing with a wax or coated with a glaze. Exemplary waxes and glazes include shellac (confectioner's glaze), mixtures of mineral oil and wax (e.g., carnauba wax, candelilla wax, etc.), mixtures of Lycasin® and maltitol, and the like.

### Methods

In one embodiment, a method of making a confectionery product comprises preparing a chewy confectionery composition region, wherein the chewy confectionery composition region is grained; center-filling the chewy confectionery composition region with a powder region comprising a sugar polyol, a saccharide, or a combination thereof to form a center-filled intermediate product; applying a coating to the surface of the center-filled intermediate product to form the confectionery product; wherein there is no conditioning step prior to packaging or sale of the confectionery product; and wherein upon consumption of the confectionery product, the powder region imparts a sensation of a liquid rather than a powder.

The chewy confectionery composition region can be prepared using a batch method or a continuous method or a combination thereof.

The confectionery products described herein may be formed by any technique known in the art for forming powder-filled confectionery. The method may generally include first extruding a powder-filled rope of a chewy confectionery composition and passing the rope through a sizing mechanism including a series of pairs of pulley-shaped roller members. The roller members "size" the rope or strand of gum material such that it leaves the series of rollers with the desired size and shape for entering a piece-forming mechanism.

In another embodiment, the method further comprises applying an optionally soft coating to the pieces, applying a coating, and an optional polishing coating to the surface of the confectionery product pieces, wherein the polish is selected from the group consisting of wax, glaze, shellac, glitter, or a combination thereof.

In the embodiments where the confectionery product is further processed by polishing with a wax or coated with a glaze a first step optionally involves the removal of residual dust, which can be achieved by blowing air, etc.; optionally applying a primer composition (e.g., a mixture of Lycasin® and maltitol); and applying shellac or confectioner's glaze.

After receiving the coating and optional polish/glaze, the confectionery product can be packaged without a conditioning step.

The confectionery product can be packaged using techniques and equipment known in the art. For example bags, packaging tins, blister trays, and the like can be used. In one embodiment is a packaged product that includes the confectionery product wherein the package has indicia on an outer surface that is indicative of the product contained in the package.

### Sensory evaluation of powder region liquidity and multiple flavor sensations

When the confectionery product is consumed, the powder region provides a sensation of a liquid rather than a powder. The liquid sensation experienced by the consumer can be measured using sensory evaluation techniques. Sensory evaluation techniques are described in texts such as Sensory Evaluation of Food: Principles & Practices, by Harry T. Lawless and Hildegarde Heymann. Suitable sensory evaluation techniques include quantitative descriptive analysis (QDA). To conduct QDA testing, a panel of respondents may be assembled. Attribute terms for evaluation of samples are selected.

Normally, ballot development and respondent training is carried out initially. Descriptive terms are developed for major sensory attribute categories. Exemplary attribute qualities can include aroma, flavor, texture, aftertaste, sweetness, and the like or combinations thereof. Attributes are quantified with a linear intensity scale of from, e.g. 0 to 10; where 0 indicates that the attribute is not detected and 10 indicates the attribute is extremely strong. Overall quality rating may be measured with a linear scale of from, e.g. 1 to 10 where less than 6 is considered "poor," 6 to 7 is "fair," and 8 to 10 is "good."

Physical reference standards are determined by a panel consensus so that proper descriptive language may be developed. Panelists may be trained in evaluating certain samples until a consensus is attained.

Overall quality ratings and quantified intensity ratings may be statistically analyzed with such programs as Minitab ver. 12 or SAS ver. 6.11. Descriptive statistical measures may be calculated for all attributes. Analysis of variance may be performed on each attribute using a randomized block design for balanced data with panelists as repeated measures as described by Ott, "Analysis of variance for some standard experimental designs," pp. 844-856 in An Introduction to Statistical Methods and Data Analysis. Wadsworth Publishing. Belmont, Calif. Where F-test indicates a significant difference between treatment means, Tukey paired comparisons and orthogonal comparisons may be used to determine where the means are different. Significance of differences may be defined as P less than 0.05. Principal components analysis (PCA) may be applied with the factor analysis described by Lawless and Heymann, 1998, pp. 606-608 in Sensory Evaluation of Food: Principles and Practices. Chapman & Hall, New York, 1998. PCA may be applied to the attributes. Attributes may be omitted if the values are consistently low indicating that the attribute is not often present, if the attribute has a high standard deviation or if the attribute is highly correlated to another attribute. Kaiser's criterion may be applied (eigenvalue greater than 1) to determine the number of final factors from the initial ones as described by Massart et al., "Principal components and factor analysis," pp. 339- 369 in Chemometrics: A Textbook. Elsevier, Amsterdam, 1988. To facilitate the interpretation of results, the factors may be orthogonally rotated leading to uncorrelated factors following the Varimax method described by Massart et al., *supra.*

In some embodiments, the texture of the powder region has a liquidity rating on a line scale of 1 to 10 as measured by QDA. As used herein, the term "liquidity" refers to a quantitative descriptive analysis metric that is an integrated term measuring texture attributes that contribute to a feeling of liquid.

In addition to sensory methods for measuring texture, specifically liquid sensation, of the powder region as described above, texture liquidity can also be measured by conventional analytical techniques.

The confectionery product exhibits multiple flavor sensations when consumed. The multiple flavor sensations can be measured using sensory evaluation techniques such as those described above including quantitative descriptive analysis.

### Volatile flavor release by PTR-MS

The real-time flavor release of volatile flavors in the confectionery product can be monitored during chewing using a Proton-Transfer-Reaction (PTR)-Mass Spectrometer Detector. By using marker flavors having unique mass ions, it is possible to determine the timing of flavor release from the powder centerfill region and the chewy confectionery composition region.

In several embodiments, the confectionery product comprising a powder region comprising a first flavorant and a particulate sweetener comprising a saccharide; a chewy confectionery composition region surrounding the powder region, the chewy confectionery region comprising a second flavorant; and a coating composition surrounding the chewy confectionery composition region; wherein upon consumption of the confectionery product i) the powder region imparts a liquid mouth feel with no powder mouth feel; and ii) the confectionery product exhibits a flavor sensation profile comprising at least two flavor sensations, wherein a first flavor sensation is the first flavorant having a maximum flavor release at 1 to 5 chews, specifically 1 to 3 chews and more specifically 1 to 2 chews; and wherein a second flavor sensation is the second flavorant having a maximum flavor release at 15 to 30 chews, specifically 17 to 25 chews, and more specifically 18 to 22 chews; wherein the first and second flavor release are measured by PTR-MS. In these embodiments, the flavor excludes sensates.

The PTR-MS method can include chewing the confectionery product at a set number of chews, placing the chewed sample in a clean sample container, analyzing the volatile flavor release from the chewed sample using PTR-MS (e.g. under conditions as shown in the Examples), and repeating the analysis for 1, 5, 10, 15, 20, and 30 chews).

When the confectionery product is chewed with a single bite, it exhibits i) a loss of powder from the powder region is 7 to 100 wt%, specifically 20 to 50wt%, and more specifically 25 to 40wt% based on the total weight of the powder region; and ii) complete dissolution of the powder region within 15 seconds when the broken sample is exposed to 37°C simulated saliva at a flow rate of 1 liter/minute it may also exhibit iii) an average piece break size of about 1 mm to a complete split, specifically 1.9 mm to a complete split, and yet more specifically 3mm to a complete split, wherein a bite force of 5.5 to 16 pounds is used to create the average piece break size. The powder region can comprise a first flavorant and the chewy confectionery composition region can comprise a second flavorant.

In an embodiment, the confectionery product comprises a powder region comprising a particulate sweetener comprising a saccharide; a chewy confectionery composition region surrounding the powder region; and a coating composition surrounding the chewy confectionery composition region; wherein when thirty samples of the confectionery product are tested by chewing with a single bite, greater than 70%, specifically greater than 75%, and more specifically greater than 80% of the samples break to expose the powder region, and wherein the confectionery product is chewed with a single bite, exhibits i) for the samples that break, a loss of powder from the powder region is 7 to 100 wt%, specifically 20 to 50wt%, and more specifically 25 to 40wt% based on the total weight of the powder region; ii) for the samples that break, over 90% of the samples exhibit complete dissolution of the powder region within 15 seconds when the broken sample is exposed to 37°C simulated saliva at a flow rate of 1 liter/minute; or iii) for the samples that break, the confectionery product has an average piece break size of 1 mm to a complete split, specifically 1.9 mm to a complete split, and yet more specifically 3mm to a complete split, wherein a bite force is 5.5 to 16 pounds. The powder region can comprise a first flavorant and the chewy confectionery composition region can comprise a second flavorant.

The single bite test described in the prior two paragraphs can be carried out using a generic bite test using human subjects or an artificially made pair of adult teeth prepared to simulate the biting action of an adult human ("fixture") connected to a texture analyzer machine. The dissolution test can be conducted using simulated saliva such as the simulated saliva disclosed in DIN V 53160-1.

The texture of the chewy confectionery region allows for the quick release of powder from the powder region after a single chew. Specifically, the powder centerfill does not get trapped in the chewy confectionery portion, thereby allowing for the consumer to perceive the powder region flavor at an early stage in the chewing process.

The features and advantages are more fully shown by the following examples which are provided for purposes of illustration, and are not to be construed as limiting the invention in any way.

### EXAMPLES

### Example 1.

Sugar-based confectionery products are prepared having a powder region center-fill, a chewy confectionery composition region, and a dextrose-based outer panned coating. The ingredients of exemplary sugar-based confectionery products are provided in Table 1 below.

**Table 1.**

| **Final Confectionery Composition (wt%)** | **Ex. 1A** | **Ex. 1B** | **Ex. 1C** | **Ex. 1D** | **Ex. 1E** | **Ex. 1F** |
|---|---|---|---|---|---|---|
| Powder region | 6-18 | 7-17 | 8-16 | 10-14 | 11-13 | 10-12 |
| Chewy confectionery | 57-79 | 58-78 | 59-77 | 64-72 | 65-71 | 66-72 |
| Coating | 15-25 | 15-25 | 15-25 | 18-22 | 18-22 | 18-22 |
| **TOTAL** | 100% | 100% | 100% | 100% | 100% | 100% |
| | | | | | | |

| **Powder region** | | | | | | |
|---|---|---|---|---|---|---|
| Dextrose monohydrate | 85-99.5 | 86-99 | 87-98.5 | 87.65-96.5 | 90.65-99.1 | 87.65-98 |
| High intensity sweetener | 0-2.0 | 0-2.0 | 0-2.0 | 0-0.85 | 0-0.85 | 0-0.85 |
| First Flavor | 0.4-4.5 | 0.4-4.5 | 0.4-4.5 | 0.4-4.5 | 0.7-4.0 | 2.0-4.5 |
| Food acid | 0-5.5 | 0-5.5 | 0-5.5 | 3-5.5 | 0.1-3 | 0-5.5 |
| Processing aid | 0-2.0 | 0-2.0 | 0-2.0 | 0.1-1.5 | 0.1-1.5 | 0.1-1.5 |
| **TOTAL Powder region** | 100% | 100% | 100% | 100% | 100% | 100% |
| | | | | | | |

| **Chewy confectionery** | | | | | | |
|---|---|---|---|---|---|---|
| Chew base | 94.1-98 | 92.3-98 | 94.9-99 | 94.55-97.3 | 94.55-97.3 | 94.55-97.3 |
| Gelatin solution | 2.0-3.6 | 1.0-3.6 | 1.0-2.0 | 2.5-3.1 | 2.5-3.1 | 2.5-3.1 |
| Second Flavor | 0-2.0 | 0-2.0 | 0-2.0 | 0.2-0.85 | 0.2-0.85 | 0.2-0.85 |
| Food acid | 0-2 | 1-2 | 0-1 | 0-1.5 | 0-1.5 | 0-1.5 |
| Color (solution ∼5-10% in water) | 0-0.1 | 0-0.1 | 0-0.1 | 0-0.07 | 0-0.07 | 0-0.07 |
| **Total Chewy confectionery** | 100% | 100% | 100% | 100% | 100% | 100% |
| | | | | | | |

| **Chew Base** | | | | | | |
|---|---|---|---|---|---|---|
| Sugar | 35-44 | 35-44 | 35-44 | 36.5-42.5 | 36.5-42.5 | 36.5-42.5 |
| Glucose syrup (42 DE) | 34-43 | 34-43 | 34-43 | 35.5-41.5 | 35.5-41.5 | 35.5-41.5 |
| Water | 7-27 | 7-27 | 7-27 | 10.5-23.5 | 10.5-23.5 | 10.5-23.5 |
| Oil blend (fat and emulsifier) | 4-6 | 4-6 | 4-6 | 4.5-5.5 | 4.5-5.5 | 4.5-5.5 |
| **Total Chew Base** | 100% | 100% | 100% | 100% | 100% | 100% |

The chewy confectionery composition region is prepared using traditional candy cookers. The chewy confectionery composition region ingredients except flavor, food acid, and color are introduced into a cooker and cooked to form a chewy confectionery composition having a final moisture content about 5.5 to about 6.5%. The chewy confectionery is then cooled and grained via mechanical agitation.

Color, food acid, and flavor are added to the grained product using a mixer. The flavored/colored product is then optionally cooled/tempered and then center-filled with the powder region composition. Exemplary processes and equipment for the center-filling process are known in the art. The powder filled rope is optionally sized, and optionally further tempered prior to piece forming. Exemplary processes and equipment for center-filled piece forming is known in the art. One exemplary process is the use of a chain die. The center-filled cores are then cooled.

The tempered center-filled cores are then provided with a panned coating.

### Example 2:

Sugar-free confectionery products are prepared having a powder region center-fill, a chewy confectionery composition region, and a maltitol-based outer panned coating. The ingredients of the exemplary sugar-free confectionery compositions are provided in Table 2.

**Table 2.**

| **Final Confectionery Composition (wt%)** | **Ex. 2A** | **Ex. 2B** | **Ex. 2C** | **Ex. 2D** | **Ex. 2E** | **Ex. 2F** |
|---|---|---|---|---|---|---|
| Powder region | 6-18 | 7-17 | 8-16 | 10-14 | 11-13 | 10-12 |
| Chewy confectionery | 57-79 | 58-78 | 59-77 | 64-72 | 65-71 | 66-72 |
| Coating | 15-25 | 15-25 | 15-25 | 18-22 | 18-22 | 18-22 |
| **TOTAL** | 100% | 100% | 100% | 100% | 100% | 100% |
| | | | | | | |

| **Powder region** | | | | | | |
|---|---|---|---|---|---|---|
| Isomalt ST-PF¹ | 30-70 | 40-60 | 30-70 | 40-60 | 0-99.7 | 30-70 |
| Erythritol | 30-70 | 40-60 | - | - | - | 5-20 |
| Xylitol | - | - | 30-70 | 40-60 | - | 5-20 |
| Mannitol | - | - | - | - | 0-99.7 | - |
| High intensity sweetener | 0-2.0 | 0-2.0 | 0-2.0 | 0.2-0.85 | 0.2-0.85 | 0.2-0.85 |
| First Flavor | 0-2.0 | 0-2.0 | 0-2.0 | 0.2-0.85 | 0.2-0.85 | 0.2-0.85 |
| Processing aid | 0.1-1.5 | 0.1-1.5 | 0.1-1.5 | 0.1-1.5 | 0.1-1.5 | 0.1-1.5 |
| **TOTAL Powder region** | 100% | 100% | 100% | 100% | 100% | 100% |
| | | | | | | |

| **Chewy confectionery** | | | | | | |
|---|---|---|---|---|---|---|
| Water | 4-8 | 4-8 | 4-8 | 4-6 | 4-6 | 4-6 |
| Isomalt | 38-67 | 38-67 | 38-67 | 45-60 | 45-60 | 45-60 |
| Maltitol syrup | 25-45 | 25-45 | 25-45 | 30-40 | 30-40 | 30-40 |

| **Final Confectionery Composition (wt%)** | **Ex. 2A** | **Ex. 2B** | **Ex. 2C** | **Ex. 2D** | **Ex. 2E** | **Ex. 2F** |
|---|---|---|---|---|---|---|
| Vegetable oil | 1-7 | 1-7 | 1-7 | 3-5 | 3-5 | 3-5 |
| Emulsifier | 0.1-0.4 | 0.1-0.4 | 0.1-0.4 | 0.2-0.3 | 0.2-0.3 | 0.2-0.3 |
| Gelatin (160 bloom) | 0.5-3 | 0.5-3 | 0.5-3 | 1.0-2.0 | 1.0-2.0 | 1.0-2.0 |
| High intensity sweetener | 0-0.02 | 0-0.02 | 0-0.02 | 0.001-0.15 | 0.001-0.15 | 0.001-0.15 |
| Flavor | 0-2.0 | 0-2.0 | 0-2.0 | 0.2-0.85 | 0.2-0.85 | 0.2-0.85 |
| **TOTAL Chewy confectionery** | 100% | 100% | 100% | 100% | 100% | 100% |

The chewy confectionery product is prepared according to the procedure described in Example 1.

### Example 3: Smoothness Factor

The particulate sweetener of the powder region has a Smoothness Factor of less than 40 seconds, specifically less than 30 seconds, and more specifically less than 25 seconds. The Smoothness Factor was determined in the following manner. A hexagonal test vessel made from polyethylene was used. The vessel was 1 inch high, had a distance between parallel sides of 4.75 inches and between vertices of 5.5 inches. A sample of 0.5 grams of the powder region or comparative was placed in the vessel followed by 15 grams of deionized water and then the resulting combination was immediately mixed with an index finger. During the mixing process, the index finger was continually rubbed along the bottom of the vessel. When the index finger no longer felt grit as it was rubbed, the test was complete. The Smoothness Factor is the time elapsed from when the water was poured into the vessel to when the finger no longer felt grit. The test was run three times on each sample and the average calculated. The test was run at Standard Temperature and Pressure. In all cases the powder consisted of 99.56% bulk ingredient, 0.14% of a spray dried flavor, 0.1% granulated citric acid and 0.2% malic acid. Test results are shown below in Table 3.

**Table 3.**

| Bulk Ingredient | Particle Size D(v,0.5) (micrometers)* | Smoothness Factor (seconds) |
|---|---|---|
| Dextrose | 181 | 23.2 |
| Bakers Sugar | 196 | 21 |
| Granulated Sugar (comparative) | 287 | 44.6 |

| | | |
|---|---|---|
| *Particle size distribution determined using a Malvern Mastersizer. | | |

As the results set forth in Table 3 show, dextrose and Bakers sugar both had a Smoothness Factor of approximately half the time of granulated sugar.

### Example 4: Powder Center-fill region texture taste test

### Preparation of Powder Center-Fill Samples

Three different samples of powder center-fill were prepared. Each sample had identical formulas in terms of flavor and acid ingredients. The only difference in formulation was the "base", i.e., the base of the samples represented a different particle size of powder saccharide.

Inventive sample 1 included dextrose as the base. The particle size of the dextrose used in Inventive sample 1 has a D(v,0.5) of 181 micrometers. The ingredients of Inventive sample 1 are provided in Table 4 below.

**Table 4.**

| **Ingredient** | **Weight (in grams)** |
|---|---|
| Dextrose | 99.56 |
| Flavor | 0.14 |
| Granulated food acid | 0.10 |

Inventive sample 1 was prepared by weighing out the ingredients listed in Table 4 above in a 500g beaker. The powders were mixed together for an even dispersion of ingredients.

Inventive sample 2 included Bakers Sugar as the base. The particle size of the Bakers Sugar used in Inventive sample 1 has a D(v,0.5) of 196 micrometers. The ingredients of Inventive sample 2 are provided in Table 5 below.

**Table 5.**

| **Ingredient** | **Weight (in g)** |
|---|---|
| Bakers Sugar | 99.56 |
| Flavor | 0.14 |
| Granulated food acid | 0.10 |

Inventive sample 2 was prepared by weighing out the ingredients listed in Table 5 above in a 500g beaker. The powders were mixed together for an even dispersion of ingredients.

The control sample included granulated sugar as the base. The particle size of the granulated sugar used in the control sample has a D(v,0.5) of 287 micrometers. The ingredients of the control sample are provided in Table 6 below.

**Table 6.**

| **Ingredient** | **Weight (in g)** |
|---|---|
| Granulated Sugar | 99.56 |
| Flavor | 0.14 |
| Granulated food acid | 0.10 |

The control sample was prepared by weighing out the ingredients listed in Table 6 above in a 500g beaker. The powders were mixed together for an even dispersion of ingredients.

A 0.3g portion of each finished center-fill powder, which represents an exemplary amount of powder center-fill in a sugar-based confectionery product including a chewy confectionery composition portion and an outer coating as described herein, was weighed out in Dart SOLO plastic 2 ounce (59 ml) cup with lids. Each sample cup was coded for use in a texture taste test, as described below.

### Texture Taste Test

A texture taste test was conducted with the Inventive and control samples from above to determine which evaluation sample had a greater liquid mouth feel. In a blind study, a group of sixteen human test subjects compared: (1) Inventive sample 1 to the control sample; and (2) Inventive sample 2 to the control sample.

The subjects were given two ballots to evaluate the perception of liquid mouth feel of the samples. Ballot #1 was for the comparison of Inventive sample 1 to the control sample. Ballot #2 was for the comparison of Inventive sample 2 to the control sample. The subjects were addressed to read and follow the evaluation ballots. The subjects also were addressed to do one ballot first and wait an hour before evaluating the second ballot. The ballots asked the following questions:

### Texture Evaluation Ballot #1:

You have two powder samples labeled with three-digit random codes
It's important that you taste them in the order indicated in the instructions
Take a drink of water before you begin

Please Taste sample XXX. Take a drink of water to cleanse your palate
Now, taste sample YYY and answer the following question

### 1. Of the two samples you tasted today, which one had a GREATER liquid mouth feel? Check One

____ the 1^{st} sample I tasted (XXX)
____ the 2^{nd} sample I tasted (YYY)

### Texture Evaluation Ballot #2:

You have two powder samples labeled with three-digit random codes
It's important that you taste them in the order indicated in the instructions
Take a drink of water before you begin

Please Taste sample WWW. Take a drink of water to cleanse your palate
Now, taste sample ZZZ and answer the following question

### 2. Of the two samples you tasted today, which one had a GREATER liquid mouth feel? Check One

____ the 1^{st} sample I tasted (WWW)
____ the 2^{nd} sample I tasted (ZZZ)

The results for Ballot #1 and Ballot #2 are provided in Table 7 below.

**Table 7.**

| **Ballot Identification** | **Which Sample had Greater Liquid Mouth Feel** | **% of subjects who agreed** |
|---|---|---|
| Ballot #1 | Inventive sample 1 | 88% |
| Ballot #2 | Inventive sample 2 | 94% |

The results set forth in Table 7 above indicate that the Inventive samples containing dextrose and Bakers sugar as the base, which each have median particle size of less than 250 micrometers (D(v,0.5)), were perceived to have a greater liquid mouth feel than the control granulated sugar sample, which has a much larger particle size. Example 5: Flavor sensation timing and duration

Sugar-based confectionery samples were prepared having a powder region center-fill, a chewy confectionery composition region, and a dextrose-based outer panned coating. The ingredients of the sugar-based confectionery samples are provided in Table 8 below.

**Table 8.**

| **Final Confectionery Composition (wt%)** | **Ex. 5** |
|---|---|
| Powder region | 11-13 |
| Chewy confectionery | 67-71 |
| Coating | 18-20 |
| **TOTAL** | 100% |
| | |

| **Powder region** | |
|---|---|
| Dextrose monohydrate | 92.3-96.5 |
| First Flavor | 0.4-0.7 |
| Food acid | 3.0-5.5 |
| Processing aid | 0.1-1.5 |
| **TOTAL Powder region** | 100% |
| | |

| **Chewy confectionery** | |
|---|---|
| Chew base | 95.55-98.8 |
| Second Flavor | 0.2-0.85 |
| Food acid | 0.5-1.5 |
| Color (solution ∼5-10% in water) | 0-0.1 |
| Powdered sugar | 0.5-2 |
| **Total Chewy confectionery** | 100% |
| | |

| **Chew Base** | |
|---|---|
| Sugar | 37-41 |
| Glucose syrup (42 DE) | 36-40 |
| Water | 9-20.5 |
| Oil blend (fat and emulsifier) | 4-6 |
| Gelatin solution | 2.5-4 |
| **Total Chew Base** | 100% |

The sugar-based confectionery product samples were prepared in accordance with the method described in Example 1 to provide individual confectionery pieces having an average piece weight of about 2.5g.

The confectionery product samples prepared in accordance with the above provide two different flavor sensations upon consumption. The powder region center-fill includes a first flavor and imparts a first flavor sensation that is an initial burst of intense first flavor accompanied by a liquid mouth feel. The chewy confectionery composition region includes a second flavor, which imparts a second flavor sensation upon consumption after the dissipation of first flavor/liquid mouth feel.

Panel Evaluation: A panel of eight human test subjects was assembled to taste and determine the extent of time of each of the two flavor sensations provided by the confectionery product samples prepared above. Each subject was asked to sample by placing the entire confectionery piece in their mouth, biting through the confectionery piece using their back teeth (molars) and then further chewing until consumed. While chewing the confectionery piece, the subjects were asked to record the following three time points:
(1) the time when the first flavor sensation initiated;
(2) the time when the first flavor sensation was substantially complete and the second flavor sensation began to take over; and
(3) the time when the chew was finished.
All of the above time points were measured in seconds using stopwatches. Two repetitions were performed.

The results for the three time points are provided in Table 9 below, Study A. The durations of time for the first and second flavor sensations and percentages of total chew time also are provided. The results were averaged across the eight subjects and the two repetitions.

A second panel with eleven human test subjects were also assembled to taste and determine the extent of time of each of the two flavor sensations provided by the confectionery product samples prepared above, Example 5. Each subject was asked to sample by biting through the middle of the product initially, and consistently chew until the product is completely gone. While chewing the confectionery piece, the subjects were asked to record the following three time points:
(1) the time when the first flavor sensation initiated;
(2) the time when the second the second flavor sensation initiated; and
(3) the time when the chew was finished.
All of the above time points were measured in seconds using stopwatches. Four repetitions were performed.

The results for the three time points are provided in Table 9 below, Study B. The durations of time for the first and second flavor sensations and percentages of total chew time also are provided. The results were averaged across the eleven subjects and the four repetitions.

**Table 9.**

| | **Study A** | | **Study B** | |
|---|---|---|---|---|
| **Time Points** | **Time (seconds)** | **% of Total Chew** | **Time (seconds)** | **% of Total Chew Time** |
| First Flavor Sensation Initiates | 6.1 | 13% | 4.9 | 11% |
| First Flavor Sensation Ends and Second Flavor Sensation Begins | 16.5 | 35% | 18.5 | 42% |
| Chew Finished | 46.8 | 100% | 43.6 | 100% |
| First Flavor Duration | 10.4 | 22% | 13.6 | 31% |
| Second Flavor Duration | 30.3 | 65% | 25.1 | 58% |

The results for Study A also are shown in Fig. 1. As seen in Table 9 above and in Fig. 1, the results of Study A indicate that the first flavor sensation initiates at a time point that is about 6 to about 21% into the total chew time, more specifically about 11 to about 15% into the total chew time, and even more specifically about 13% into the total chew time. The first flavor sensation is substantially complete and the second flavor sensation begins to take over at a time point that is about 24 to about 52% into the total chew time, more specifically about 33 to about 38% into the total chew time, and even more specifically about 35% into the total chew time. Accordingly, the first flavor sensation lasts not more than about 12 to about 36% of the total chew time, more specifically about 20 to about 25% of the total chew time, and even more specifically about 22% of the total chew time. The second flavor sensation lasts for the remainder of the chew time, or about 48 to about 76% of the total chew time, more specifically about 61 to about 68% of the total chew time, and even more specifically about 65% of the total chew time.

As seen in Table 9 above for the Study B, the results indicate that the first flavor sensation initiates at a time point that is about 5 to about 25% into the total chew time, more specifically about 10 to about 13% into the total chew time, and even more specifically about 11% into the total chew time. The first flavor sensation is substantially complete and the second flavor sensation begins to take over at a time point that is about 20 to about 86% into the total chew time, more specifically about 38 to about 47% into the total chew time, and even more specifically about 42% into the total chew time. Accordingly, the first flavor sensation lasts not more than about 11 to about 61% of the total chew time, more specifically about 27 to about 35% of the total chew time, and even more specifically about 31% of the total chew time. The second flavor sensation lasts for the remainder of the chew time, or about 14 to about 80% of the total chew time, more specifically about 51 to about 65% of the total chew time, and even more specifically about 58% of the total chew time. The results for Study B also are shown in Fig. 2.

### Example 6: Real-time flavor release analysis by Proton-Transfer-Reaction (PTR)-Mass Spectrometer Detector (MSD)

Sugar-based confectionery samples were prepared having a powder region center-fill, a chewy confectionery composition region, and a dextrose-based outer panned coating. The ingredients of the sugar-based confectionery samples are provided in Table 10 below.

**Table 10.**

| **Final Confectionery Composition (wt%)** | **Ex. 6** |
|---|---|
| Powder region | 11-13 |
| Chewy confectionery | 60-71 |
| Coating | 18-30 |
| **TOTAL** | 100% |
| | |

| **Powder region** | |
|---|---|
| Dextrose monohydrate | 92.3-96.5 |
| First Flavor | 0.4-1.5 |
| Food acid | 0.3-5.5 |
| Processing aid | 0.1-1.5 |
| **TOTAL Powder region** | 100% |
| | |

| **Chewy confectionery** | |
|---|---|
| Chew base | 95.55-98.8 |
| Second Flavor | 0.2-0.85 |
| Food acid | 0.5-1.5 |
| Color (solution ∼5-10% in water) | 0-0.1 |
| Powdered sugar | 0.5-2 |
| **Total Chewy confectionery** | 100% |
| | |

| **Chew Base** | |
|---|---|
| Sugar | 37-41 |
| Glucose syrup (42 DE) | 36-40 |
| Water | 9-20.5 |
| Oil blend (fat and emulsifier) | 4-6 |
| Gelatin solution | 2.5-4 |
| **Total Chew Base** | 100% |

The sugar-based confectionery product samples were prepared in accordance with the method described in Example 1 to provide individual confectionery pieces having an average piece weight of about 2.5g. A real-time trace volatile flavor release analysis of the sugar-based confectionery was made using a Proton-Transfer-Reaction (PTR)-Mass Spectrometer Detector (MSD) such as those commercially available from Ionicon Analytik G.m.b.H. The PTR-MS conditions are provided in Table 11 below:

**Table 11.**

| | |
|---|---|
| Foreline | 1.85 mbar |
| Drift | 2.38 mbar |
| Toflens | 1.17E-5 mbar |
| Toflens | 2.42E-7 mbar |
| | |
| Uₛ | 110V |
| Uₛₒ | 80V |
| U_{drift} | 600V |
| U_{dx} | 30V |
| I_{hc} | 5.5 mA |
| | |
| Setting | H₃0⁺-HCL |
| PC inlet | 170 mbar |
| Drift pressure | 2.2 mbar |
| FC inlet | 100 sccm |
| H₂0 | 5.5 sccm |
| SV (proportion valve) | 55% |
| Drift temp | 60°C |
| Inlet temp | 80°C |

The confectionery contains different flavors in the powder region and the chewy confectionery. The first flavor of the powder region contained marker compounds limonene and α-terpinene, both of which provide mass ions of C₁₀H₁₇⁺, 137.133.

The second flavor of the chewy confectionery contains marker compounds cis-3-hexenyl acetate (C₈H₁₅O₂⁺, 143.107), hexyl acetate and ethyl hexanoate (C₈H₁₇O₂⁺, 145.123), and isoamyl isovalerate (C₁₀H₂₁O₂⁺, 173.154).

Sample preparation and measurements: One piece of the confectionery of Example 6 was placed a human mouth and chewed with the molars at different degrees: 1-chew (about 1 second), 5-chews (about 5 seconds), 10-chews (about 10 seconds), 15-chews (about 15 seconds), 20-chews (about 20 seconds) and 30-chews (about 30 seconds). After the set number of chews, each bolus was immediately ejected from the mouth into a separate, clean 2-ounce sample cup and submitted for PTR-MS analysis. PTR-MS flavor analyzing time was set for 120 cycles (120s). Each number of chews was repeated for a total of 2 runs. The quantitation data from bolus head space analysis are provided in Table 12; cps = counts per second.

**Table 12.**

| | **Number of Chews** [average of 2 runs] | | | | | |
|---|---|---|---|---|---|---|
| | **1** | **5** | **10** | **15** | **20** | **30** |
| | % of total chewing time | | | | | |
| | 3.33 | 16.67 | 33.33 | 50 | 66.67 | 100 |

| **Marker, mass ion** | **cps** | | | | | |
|---|---|---|---|---|---|---|
| limonene & α-terpinene, C₁₀H₁₇⁺, 137.133 | 960.00 | 415.00 | 153.00 | 251.50 | 109.50 | 15.65 |
| cis-3-hexenyl acetate, C₈H₁₅O₂⁺, 143.107 | 2.19 | 2.51 | 2.95 | 2.77 | 6.30 | 4.75 |
| hexyl acetate & ethyl hexanoate, C₈H₁₇O₂⁺, 145.123 | 23.00 | 22.00 | 26.50 | 25.00 | 57.25 | 43.25 |
| isoamyl isovalerate, C₁₀H₂₁O₂⁺, 173.154 | 0.64 | 0.65 | 0.72 | 0.68 | 1.41 | 1.09 |

As can be seen from the data, the limonene and α-terpinene of the powder region released predominantly in the early stages of the chewing process and the release dropped off markedly after 10 chews. The flavor of the chewy confectionery was not released significantly until 15 chews and maximized at 20 chews. All the flavors reduced to low levels after 30 chews.

### Example 7: Physical testing of Sugar-based confectionery

The sugar-based confectionery of Example 6 was tested for bite force, break type and length, powder loss from the powder region, and powder region dissolvability.

An artificially made pair of adult teeth ("fixture) was prepared to simulate the biting action of an adult human. Prothsodontic simulations of the dentition of an adult male were attached to an MTS Inc. Q Test Machine, which allowed for compression at a constant load rate. The fixture was connected to a texture analyzer in order to measure peak bite force in pounds (lbs). Each piece of the sugar-based confectionery of Example 6 was placed between the upper and lower molars of the fixture and bitten with a single bite with a crosshead speed of 5.08cm (2.0 inches) per minute and an extension limit of 2.54cm (1 inch). A stopper was placed in the mouth to prevent the sample from slipping during compression. The samples were bitten in one of two orientations: perpendicular, where the longest length of the sample
is perpendicular to the row of molars of the fixture; or parallel, where the longest length of the sample is parallel to the row of molars of the fixture. The samples broke according to one of three scenarios:
Scenario A: the sample resulted in two separate pieces.
Scenario B: the sample cracked, but remained as a single piece with the powder of the powder region visible.
Scenario C: the sample remained as a single piece, but the powder of the powder region was not visible.

Thirty samples were run at a perpendicular bite orientation and the number of pieces per Scenario was determined along with peak bite force, and break length (for the Scenario B results). An additional thirty samples were run at a parallel bite orientation and the number of pieces per Scenario was determined along with peak bite force, break length (for the Scenario B results), and percent powder loss. The percent powder loss was calculated by measuring the weight of the sample before and after the bite.

**Table 13.**

| # of samples per Scenario, total samples n = 30 | Perpendicular bite | | Parallel bite | |
|---|---|---|---|---|
| Scenario A | 21 | | 0 | |
| Scenario B | 8 | | 24 | |
| Scenario C | 1 | | 6 | |

| | Perpendicular bite | | Parallel bite | |
|---|---|---|---|---|
| Peak bite force (pounds) | Scenarios A, B, and C | Scenarios A and B | Scenarios A, B, and C | Scenarios A and B |
| Minimum | 1.5 | 1.5 | 5.5 | 5.5 |
| Maximum | 14.2 | 14.2 | 13.4 | 11.8 |
| Average | 11.1 | 11.0 | 9.6 | 9.2 |

| | Perpendicular bite | | Parallel bite | |
|---|---|---|---|---|
| Break length millimeters | Scenario B | | Scenario B | |
| Minimum | 1.5 | | 1.0 | |
| Maximum | 2.5 | | 3.0 | |
| Average | 2.0 | | 1.9 | |

| | Perpendicular bite | | Parallel bite | |
|---|---|---|---|---|
| % Powder loss | | | Scenarios A, B, and C | Scenario B |
| Minimum | - | - | 0 | 7 |
| Maximum | - | - | 105 | 105 |
| Average | - | - | 24 | 32 |

As shown by the results in Table 13 above the majority of the samples broke in half or cracked to expose the powder region when bit by a single bite. Furthermore, the average % powder loss from the samples showed that the texture of the chewy confectionery region allows for the quick release of powder from the powder region after a single chew.

In a powder region dissolvability study, 30 samples of the confectionery of Example 6 were bitten by the fixture while the sample was in a parallel orientation to the row of molars. The crosshead speed was 5.08cm (2.0 inches) per minute and the extension limit was 2.54cm (1 inch). Of the 30 samples, only 3 pieces failed to break and expose the powder region. Of the remaining 27 samples, the samples were placed on a sieve of a dissolvability assessment machine and exposed to a flow of 37°C simulated saliva at a constant flow rate of 1 liter/minute. The simulated saliva was prepared from sodium bicarbonate, sodium chloride, potassium carbonate, and water according to DIN 53160. A peristaltic pump interfaces with a flow meter to subject sample to a constant rate of simulated saliva. The sample was examined at 5, 10 and 15 seconds to determine if there was any powder remaining from the powder region. Of the 27 samples that broke to expose the powder region, only 2 had powder remaining after 15 seconds in the dissolvability assessment machine; 7 had no powder present after 5 seconds; 15 had no powder present after 10 seconds; and 3 had no powder present after 15 seconds. The powder region dissolvability study illustrates the unique texture property of the chewy confectionery that provides a rapid release of the powder centerfill region once bitten. The powder centerfill does not get trapped in the chewy confectionery portion, thereby allowing for the consumer to perceive the powder region flavor at an early stage in the chewing process.

As used herein the terms "comprising" (also "comprises," etc.), "having," and "including" is inclusive (open-ended) and does not exclude additional, unrecited elements or method steps. The singular forms "a," "an," and "the" include plural referents unless the context clearly dictates otherwise. The endpoints of all ranges directed to the same characteristic or component are independently combinable, and inclusive of the recited endpoint. The term "combination" is inclusive of a homogenous or non-homogenous blend, mixture, or alloy of the named components into an integrated whole. The term "homogenous" refers to a uniform blend of the components. The word "or" means "and/or."

While the invention has been described with reference to an exemplary embodiment, it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A confectionery product, comprising:
a powder region comprising a particulate sweetener comprising a saccharide, the particulate sweetener having a particle size D(v,0.5) of 250 micrometers or less;
a chewy confectionery composition region surrounding the powder region, wherein the chewy confectionery composition has a hardness of 8 to 20 N/m² as measured by a texture analyzer;
and
a coating composition surrounding the chewy confectionery composition
region, wherein the coating composition is a combination of a soft panned coating and a hard panned coating wherein the soft panned coating is an intermediate layer between the chewy confectionery composition region and the hard panned coating;
wherein the confectionery product cracks or splits in half when chewed with a single bite, and exhibits
i) a loss of powder from the powder region of 7 to 100 wt% based on the total weight of the powder region; or
ii) complete dissolution of the powder region within 15 seconds when the broken sample is exposed to 37°C simulated saliva at a flow rate of 1 liter/minute.

2. The confectionery product of claim 1, comprising:
the powder region further comprises a first flavorant; and
the chewy confectionery composition region further comprises a second flavorant;
wherein upon consumption of the confectionery product
i) the powder region imparts a liquid mouth feel with no powder mouth feel; and
ii) the confectionery product exhibits a flavor sensation profile comprising at least two flavor sensations,
wherein a first flavor sensation is the first flavorant having a maximum flavor release at 1 to 5 chews; and
wherein a second flavor sensation is the second flavorant having a maximum flavor release at 15 to 30 chews;
wherein the first and second flavorant release are measured by PTR-MS.

3. The confectionery product of any one of claims 1-2, wherein the powder region comprises a saccharide, wherein the saccharide is sucrose (sugar), dextrose, maltose, dextrin, xylose, ribose, glucose, mannose, galactose, fructose (levulose), lactose, corn syrup solids, or a combination thereof.

4. The confectionery product of any one of claims 1-3, wherein powder region comprises 85 to 100 wt% of particulate sweetener based on the total weight of the powder region.

5. The confectionery product of any one of claims 1-4, wherein the chewy confectionery composition region comprises a bulk sweetener, a fat, an emulsifier, a hydrocolloid, and water.

6. The confectionery product of any one of claims 1-5, wherein the chewy confectionery composition region comprises the bulk sweetener in an amount of 65 to 92wt% based on the total weight of the chewy confectionery composition region, specifically 70 to 85wt%, and yet more specifically 75 to 80 wt%.

7. The confectionery product of any one of claims 5-6, wherein the chewy confectionery composition region comprises fat in an amount of 1 wt% to 7 wt% based on the total weight of the chewy confectionery composition region.

8. The confectionery product of any one of claims 1-7, wherein the chewy confectionery composition region has a water content of 5.5 to 6.5 wt% based on the total weight of the chewy confectionery composition region.

9. The confectionery product of claim 1, wherein the soft panned coating is an intermediate layer between the chewy confectionery composition region and the hard panned coating.

10. The confectionery product of claim 1 or 9, wherein the weight ratio of the soft panned coating : the hard panned coating is
10:90 to 90:10,
20:80 to 80:20,
30:70 to 70:30,
40:60 to 60:40, or
45:55 to 55:45.

11. The confectionery product of any one of claims 1-10, wherein
the amount of powder region is 5 to 20 wt% based on total weight
of the confectionery composition;
the amount of chewy confectionery composition region is 50 to 85
wt% based on total weight of the confectionery composition; or
the amount of coating composition is 10 to 30 wt% based on total
weight of the confectionery composition.

12. The confectionery product of any one of claims 1-11, further comprising a food acid or salt thereof, a high intensity sweetener, a sensate, an additional flavorant, a flavor modulator or potentiator, a coloring agent, a functional ingredient, or a combination thereof.

13. A method of making a confectionery product which is to be consumed, comprising:
preparing a chewy confectionery composition region, the chewy confectionery composition having a hardness of 8 to 20 N/m² as measured by a texture analyzer;
center-filling the chewy confectionery composition region with a powder region comprising a saccharide having a particle size D(v,0.5) of 250 micrometers or less to form a center-filled intermediate product;
applying a soft coating to the surface of the center-filled intermediate product and then applying a hard coating to form the confectionery product;
wherein there is no conditioning step prior to packaging or sale of the confectionery product; and
wherein upon consumption of the confectionery product, the powder region imparts a liquid mouth feel with no powder mouth feel.

## Patentansprüche

1. Süßwarenprodukt, umfassend:
einen Pulverbereich umfassend einen partikelförmigen Süßstoff umfassend ein Saccharid, wobei der partikelförmige Süßstoff eine Partikelgröße D(v,0,5) von 250 Mikrometer oder weniger aufweist;
einen Bereich mit zäher Süßwarenzusammensetzung, der den Pulverbereich umgibt, wobei die zähe Süßwarenzusammensetzung eine Härte von 8 bis 20 N/m² gemessen durch einen Textur-Analysator aufweist;
und
eine Beschichtungszusammensetzung, die den Bereich mit zäher Süßwarenzusammensetzung umgibt, wobei die Beschichtungszusammensetzung eine Kombination einer Weichdrageebeschichtung und einer Hartdrageebeschichtung ist, wobei die Weichdrageebeschichtung eine Zwischenschicht zwischen dem Bereich mit zäher Süßwarenzusammensetzung und der Hartdrageebeschichtung ist;
wobei das Süßwarenprodukt sich in zwei Hälften teilt oder zerbricht, wenn es mit einem einzelnen Biss gekaut wird, und
i) einen Verlust an Pulver aus dem Pulverbereich von 7 bis 100 Gew.-% bezogen auf das Gesamtgewicht des Pulverbereichs; oder
ii) die vollständige Auflösung des Pulverbereichs innerhalb von 15 Sekunden zeigt, wenn die zerbrochene Probe simuliertem Speichel mit einer Flussrate von 1 Liter/Minute bei 37 °C ausgesetzt wird, aufweist.

2. Süßwarenprodukt nach Anspruch 1, umfassend:
der Pulverbereich des Weiteren einen ersten Aromastoff umfasst; und
der Bereich mit zäher Süßwarenzusammensetzung ferner einen zweiten Aromastoff umfasst;
wobei bei Konsum des Süßwarenprodukts
i) der Pulverbereich ein flüssiges Mundgefühl, jedoch kein pulveriges Mundgefühl bereitstellt; und
ii) das Süßwarenprodukt ein Geschmackswahrnehmungsprofil umfassend zumindest zwei Geschmackswahrnehmungen zeigt,
wobei eine erste Geschmackswahrnehmung der erste Aromastoff mit einer maximalen Aromafreisetzung bei 1 bis 5 Kauvorgängen ist; und
wobei eine zweite Geschmackswahrnehmung der zweite Aromastoff mit einer maximalen Aromafreisetzung bei 15 bis 30 Kauvorgängen ist;
wobei die erste und zweite Aromastofffreisetzung durch PTR-MS gemessen werden.

3. Süßwarenprodukt nach einem der Ansprüche 1 bis 2, wobei der Pulverbereich ein Saccharid umfasst, wobei das Saccharid Sucrose (Zucker), Dextrose, Maltose, Dextrin, Xylose, Ribose, Glucose, Mannose, Galactose, Fructose (Laevulose), Lactose, Maissirup-Feststoffe, oder eine Kombination davon ist.

4. Süßwarenprodukt nach einem der Ansprüche 1 bis 3, wobei der Pulverbereich 85 bis 100 Gew.-% an partikelförmigen Süßstoff bezogen auf das Gesamtgewicht des Pulverbereichs umfasst.

5. Süßwarenprodukt nach einem der Ansprüche 1 bis 4, wobei der Bereich mit zäher Süßwarenzusammensetzung einen Füllsüßstoff, ein Fett, einen Emulgator, ein Hydrokolloid und Wasser umfasst.

6. Süßwarenprodukt nach einem der Ansprüche 1 bis 5, wobei der Bereich mit zäher Süßwarenzusammensetzung den Füllsüßstoff in einer Menge von 65 bis 92 Gew.-%, im Speziellen 70 bis 85 Gew.-%, und noch spezieller 75 bis 80 Gew.-%, bezogen auf das Gesamtgewicht des Bereichs mit zäher Süßwarenzusammensetzung umfasst.

7. Süßwarenprodukt nach einem der Ansprüche 5 bis 6, wobei der Bereich mit zäher Süßwarenzusammensetzung Fett in einer Menge von 1 bis 7 Gew.-% bezogen auf das Gesamtgewicht des Bereichs mit zäher Süßwarenzusammensetzung umfasst.

8. Süßwarenprodukt nach einem der Ansprüche 1 bis 7, wobei der Bereich mit zäher Süßwarenzusammensetzung einen Wassergehalt von 5,5 bis 6,5 Gew.-% bezogen auf das Gesamtgewicht des Bereichs mit zäher Süßwarenzusammensetzung umfasst.

9. Süßwarenprodukt nach Anspruch 1, wobei die Weichdrageebeschichtung eine Zwischenschicht zwischen dem Bereich mit zäher Süßwarenzusammensetzung und der Hartdrageebeschichtung ist.

10. Süßwarenprodukt nach Anspruch 1 oder 9, wobei das Gewichtsverhältnis der Weichdrageebeschichtung zu der Hartdrageebeschichtung
10 : 90 bis 90 : 10,
20 : 80 bis 80 : 20,
30 : 70 bis 70 : 30,
40 : 60 bis 60 : 40, oder
45 : 55 bis 55 : 45 beträgt.

11. Süßwarenprodukt nach einem der Ansprüche 1 bis 10, wobei die Menge des Pulverbereichs 5 bis 20 Gew.-% bezogen auf das Gesamtgewicht der Süßwarenzusammensetzung beträgt;
die Menge des Bereichs mit zäher Süßwarenzusammensetzung 50 bis 85 Gew.-% bezogen auf das Gesamtgewicht der Süßwarenzusammensetzung beträgt; oder
die Menge der Beschichtungszusammensetzung 10 bis 30 Gew.-% bezogen auf das Gesamtgewicht der Süßwarenzusammensetzung beträgt.

12. Süßwarenprodukt nach einem der Ansprüche 1 bis 11, des Weiteren umfassend eine Lebensmittelsäure oder ein Salz davon, einen hochintensiven Süßstoff, einen Wahrnehmungsstoff, einen zusätzlichen Aromastoff, einen Aroma-Modulator oder -Verstärker, einen Farbstoff, einen funktionellen Bestandteil oder eine Kombination davon.

13. Verfahren zur Herstellung eines Süßwarenprodukts, das konsumiert werden soll, umfassend:
Zubereiten eines Bereichs mit zäher Süßwarenzusammensetzung, wobei die zähe Süßwarenzusammensetzung eine Härte von 8 bis 20 N/m² gemessen durch einen Textur-Analysator aufweist;
zentrales Füllen des Bereichs der zähen Süßwarenzusammensetzung mit einem Pulverbereich umfassend ein Saccharid mit einer Partikelgröße D(v,0,5) von 250 Mikrometer oder weniger, um ein zentral gefülltes Zwischenprodukt zu bilden;
Aufbringen einer Weichbeschichtung auf die Oberfläche des zentral gefüllten Zwischenprodukts und anschließendes Aufbringen einer Hartbeschichtung, um das Süßwarenprodukt zu bilden;
wobei vor der Verpackung oder dem Verkauf des Süßwarenprodukts kein Aufbereitungsschritt erfolgt; und
wobei bei Konsum des Süßwarenprodukts der Pulverbereich ein flüssiges Mundgefühl, jedoch kein pulveriges Mundgefühl bereitstellt.

## Revendications

1. Produit de confiserie, comprenant :
une région de poudre, comprenant un édulcorant en particules, comprenant un saccharide, l'édulcorant en particules ayant une granulométrie D(v,0.5) inférieure ou égale à 250 microns;
une région de composition de confiserie à mastiquer, entourant la région de poudre,
dans lequel la composition de confiserie à mastiquer a une dureté de 8 à 20 N/m², telle que mesurée par un analyseur de texture,
et
u ne composition d'enrobage, entourant la région de composition de confiserie à mastiquer, la composition d'enrobage étant une combinaison d'un enrobage cristallisé souple
et d'un enrobage cristallisé dur, l'enrobage cristallisé souple étant une couche intermédiaire entre la région de composition de confiserie à mastiquer et l'enrobage cristallisé dur;
dans lequel le produit de confiserie se craquelle ou se fend à moitié lorsqu'il est mastiqué par un seul coup de dent et présente
i) une perte de poudre de la région de poudre de 7 à 100% en poids par rapport au poids total de la région de poudre ou
ii) une dissolution complète de la région de poudre en 15 secondes lorsque l'échantillon brisé est exposé à 37°C à de la salive simulée, à un débit de 1 litre/minute.

2. Produit de confiserie suivant la revendication 1, comprenant :
la première région de poudre comprend un premier arôme et
la région de composition de confiserie à mâcher comprend, en outre, un deuxième arôme;
dans lequel, après consommation du produit de confiserie
i) la région de poudre donne en bouche une sensation liquide sans sensation de poudre en bouche et
ii) le produit de confiserie présente un profil de sensation de saveur, comprenant au moins deux sensations de saveur,
dans lequel la première sensation de saveur est le premier arôme ayant une libération de saveur maximum à une à cinq mastications et
dans lequel une deuxième sensation de saveur est le deuxième arôme ayant une libération maximum de saveur à 15 à 30 mastications;
dans lequel la première et la deuxième libérations d'arôme sont mesurées par PTR-MS.

3. Produit de confiserie suivant l'une quelconque des revendications 1 à 2, dans lequel la région de poudre comprend un saccharide, le saccharide étant du saccharose (sucre), du dextrose, du maltose, de la dextrine, du xylose, du ribose, du glucose, du mannose, du galactose, du fructose (lévulose), du lactose, des matières solides de sirop de maïs ou leurs combinaisons.

4. Produit de confiserie suivant l'une quelconque des revendications 1 à 3, dans lequel la région de poudre comprend de 85 à 100% en poids d'édulcorant en particules par rapport au poids total de la région de poudre.

5. Produit de confiserie suivant l'une quelconque des revendications 1 à 4, dans lequel la région de composition de confiserie à mâcher comprend un édulcorant en masse, une matière grasse, un émulsionnant, un hydrocolloïde et de l'eau.

6. Produit de confiserie suivant l'une quelconque des revendications 1 à 5, dans lequel la région de composition de confiserie à mastiquer comprend l'édulcorant en masse en une quantité de 65 à 92% en poids par rapport au poids total de la région de composition de confiserie à mastiquer, précisément de 70 à 85% en poids, et d'une manière encore plus précise, de 75 à 80% en poids.

7. Produit de confiserie suivant l'une quelconque des revendications 5 à 6, dans lequel la région de composition de confiserie à mastiquer comprend de la matière grasse, en une quantité de 1% en poids à 7% en poids par rapport au poids total de la région de composition de confiserie à mastiquer.

8. Produit de confiserie suivant l'une quelconque des revendications 1 à 7, dans lequel la région de composition de confiserie à mastiquer a une teneur en eau de 5,5 à 6,5% en poids par rapport au poids total de la région de composition de confiserie à mastiquer.

9. Produit de confiserie suivant la revendication 1, dans lequel l'enrobage cristallisé souple est une couche intermédiaire entre la région de composition de confiserie à mastiquer et l'enrobage cristallisé dur.

10. Produit de confiserie suivant la revendication 1 ou 9, dans lequel le rapport en poids enrobage cristallisé souple : enrobage cristallisé dur est
10:90 à 90:10,
20:80 à 80:20,
30:70 à 70:30,
40:60 à 60:40, ou
45:55 à 55: 45.

11. Produit de confiserie suivant l'une quelconque des revendications 1 à 10, dans lequel la quantité de la région de poudre est de 5 à 20% en poids par rapport au poids total de la composition de confiserie;
la quantité de la région de la composition de confiserie à mastiquer est de 50 à 85% en poids par rapport au poids total de la composition de confiserie ou
la quantité de la composition d'enrobage est de 10 à 30% en poids par rapport au poids total de la composition de confiserie.

12. Produit de confiserie suivant l'une quelconque des revendications 1 à 11, comprenant, en outre, un acide alimentaire ou l'un de ses sels, un édulcorant de grande intensité, un agent donnant une sensation, un arôme supplémentaire, un modulateur d'arôme ou un potentiateur d'arôme, un colorant, un ingrédient fonctionnel ou leurs combinaisons.

13. Procédé pour faire un produit de confiserie, qui doit être consommé, comprenant :
préparer une composition de confiserie à mastiquer, la composition de confiserie à mastiquer ayant une dureté de 8 à 20 N/m², telle que mesurée par un analyseur de texture;
fourrer la région de composition de confiserie à mastiquer d'une région de poudre, comprenant un saccharide ayant une granulométrie D(v,0.5) inférieure ou égale à 250 microns pour former un produit intermédiaire fourré;
appliquer un enrobage souple à la surface du produit intermédiaire fourré, puis appliquer un enrobage dur pour former le produit de confiserie;
dans lequel il n'y a pas de stade de conditionnement avant l'emballage ou la vente du produit de confiserie et
dans lequel, après consommation du produit de confiserie, la région de poudre donne en bouche un sentiment liquide sans sentiment de poudre en bouche.
